Europäisches Patentamt

European Patent Office

Office européen des brevets

(11) Publication number: **0 355 458**
**A2**

# EUROPEAN PATENT APPLICATION

(21) Application number: 89113847.1

(22) Date of filing: 27.07.89

(51) Int. Cl.⁴: **G06F 3/033**

The title of the invention has been amended (Guidelines for Examination in the EPO, A-III, 7.3).

(30) Priority: 15.08.88 US 232353

(43) Date of publication of application:
28.02.90 Bulletin 90/09

(84) Designated Contracting States:
DE FR GB

(71) Applicant: **International Business Machines Corporation**
**Old Orchard Road**
**Armonk, N.Y. 10504(US)**

(72) Inventor: **Gursky, Michael Carleton**
**100 Cedar Grove Road**
**Southbury Connecticut 06488(US)**
Inventor: **Kelley, John Falk**
**23 Powder Horn Road**
**Peekskill New York 10566(US)**

(74) Representative: **Blutke, Klaus, Dipl.-Ing.**
**IBM Deutschland GmbH Intellectual Property**
**Dept. Schönaicher Strasse 220**
**D-7030 Böblingen(DE)**

(54) **Method and apparatus for selecting items of a menu.**

(57) A method and apparatus for selecting any one (35) of a number of items of a menu (20) with minimal cursor movement. With this invention the items of the menu are displayed about a central point (30) with visible radii extending therefrom. When a user of the display terminal which is to make a selection for one of items of the menu, the user need merely move the cursor a minimal distance from the central point so that it is positioned in a corresponding area having two radii as sides of the area's perimeter. When the menu appears on the display, the cursor is positioned at the central point of the menu.

# F I G. 1

EP 0 355 458 A2

# POP-UP MENU PIES

This invention relates to an apparatus and a method for selecting an item from a menu of a graphic display with minimal cursor movement, while also allowing for broader cursor movement by a novice terminal user. More specifically, the items of the display are displayed about a central point on the display with radii extending from that central point. An item is then selected by positioning the cursor anywhere in a corresponding area having two of the radii as sides of its perimeter.

In the past decade, the use of data processor controlled interactive display terminals has been widespread. In order to make the computer more friendly to the user, programmers have resorted to a use of menus which are displayed on the interactive display terminals. Traditional POP-UP menus on a mouse driven display system are typically presented as a vertical list choices. If the list is long, a fair amount of hand motion to select items on the menu is necessary.

A menu format which is not the traditional vertical list is disclosed in U.S. Patent 4,586,035 to Baker et al. This patent describes a multiple overlapping window type display on an interactive display terminal. One or more of the windows have an associated virtual distributed menu which is made of menu items which are distributed about the periphery of the associated window but not displayed during normal operations. When a cursor moves across a selected region in a window periphery, a selected menu item associated with the particular selected region will be displayed. Thus, it can be seen that the Baker patent requires that a cursor be moved about the periphery of a window in order to select an item in a menu. Moreover, the items on the menu are not visible.

U.S. Patent 4,692,858 to Redford et al discloses a method for assigning menu items to locations on a display. With this method, the first 16 items are placed in a single column, the next 16 items are split into two columns, the third set of 16 items are split into three columns, and so on. Selection of an item in a menu could require the user to move the cursor up to eight rows vertically and an indeterminate distance horizontally.

An article entitled, "An Empirical Comparison of Pie vs. Linear Menus" by Hopkins et al, discloses a menu in which the items are displayed in a circular pattern about the center of the circle. The previously mentioned article, however, does not use visible radii extending from a central point. Thus, using the menu described by Hopkins et al, the user of the menu is unaware of the effect of his next cursor movement. With the Hopkins article, some amount of guesswork as to where the cursor need be placed on the menu display in order to select a chosen item is required. With this invention, however, the user need not wander about the menu with the cursor in order to select a desired menu item. With this invention, the user knows exactly which item of the menu will be selected for any given cursor position. The aforementioned article was published in September 1987 from the Department of Computer Science of the University of Maryland.

Therefore, on a graphic display a need exists for a menu from which items can be selected with minimal cursor movement.

It it therefore an object of this invention to minimize cursor movement when selecting an item in a menu on a graphic display.

This object of the invention is accomplished by the features of the main claims. Further advantages of the invention are characterized in the subclaims.

The present invention provides a method and apparatus for selecting items of a menu on a graphic display with minimal cursor movement. This invention comprises means for displaying the items of a menu about a central point on a graphic display. This invention also comprises a means, responsive to the positioning of a cursor, for selecting one of the items when the cursor is positioned in an area between two radii extending from the central point.

The invention will be apparent from the following more particular description of preferred embodiments of the invention as illustrated in the accompaying figures.

FIG. 1 is a 6-entry menu with radii extending from a central point.

FIG. 2 is a 8-entry menu with radii extending from a central point.

FIG. 3 is a 10-entry menu with radii extending from a central point.

FIG. 4 is a 12-entry menu with radii extending from a central point.

FIG. 5 is a schematic illustration of an area with two parallel sides as part of its perimeter.

FIG. 6 is a schematic illustration of an area having two parallel sides orthogonal to a third side with all three sides being part of the perimeter of the area.

FIG. 7 is an arbitrary area with two radii extending from a central point.

FIG. 8 is a detailed construction of one half of an 8-item menu.

FIG. 9 is a detailed construction of one half of a 10-item menu.

FIG. 10 is a schematic illustration of an 11-item menu, six items in one column, five items in another column. Notice that the two columns are arranged about the central point.

FIG. 11 is a schematic illustration of an 11-item menu with six items in each column, with one of the items being unused in the right hand column.

FIGS. 12-15 illustrate various possible cases when testing for the intersection of a line with a line segment.

FIGS. 16 & 17 illustrate the values of a test condition relative to a line.

FIG. 18 is a schematic illustration of a circular menu with icons.

FIG. 19 is a flow chart for a procedure to generate the coordinates of a list of menu items.

FIG. 20 is a flow chart for a procedure to test whether a point is contained inside a polygon.

FIG. 21 is a flow chart for a procedure to handle the tracking of a pointing device and highlighting of menu items.

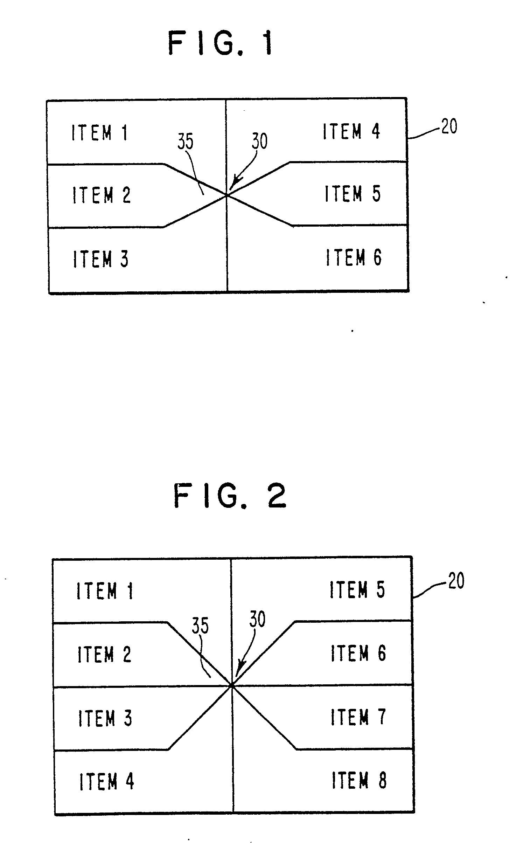

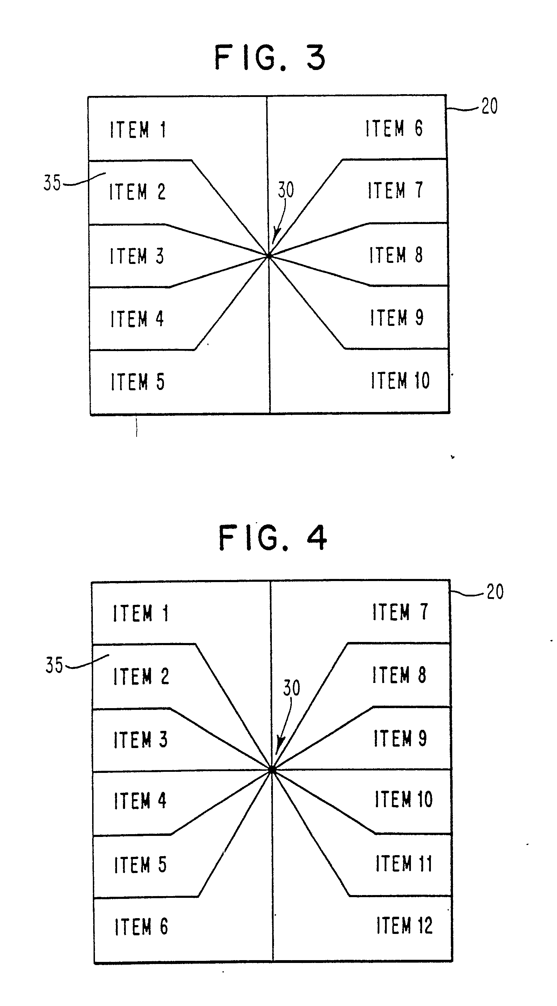

Shown in each of FIGS. 1-4 is a menu 20 of this invention which would appear on a graphic display. With the menu of FIG. 1, for example, a user of the display terminal can select any one of six items (see items 1-6) on the menu. Shown also in each of FIGS. 1-4 is a central point 30 with radii 25 extending therefrom. Also shown is cursor 35 in a position between two radii corresponding to the selection of item 2 of the menu. Notice that with this menu, any item on the menu may be chosen with minimal or broad cursor movement. Typically, when the menu 20 pops up on a graphic display, the central point 30 appears at the last cursor position, thereby minimizing reestablishment of the locus of attention. When, for example a user wishes to choose any one of the items of the menu, the user need merely move the cursor only a slight distance form the central point. For example, suppose the user decided to select item 8 of the menu. Since the cursor is typically at the central point, the user need merely move the cursor so that it appears in a corresponding area having two radii which form at least two sides of its perimeter. The area in this example corresponds to item 8.

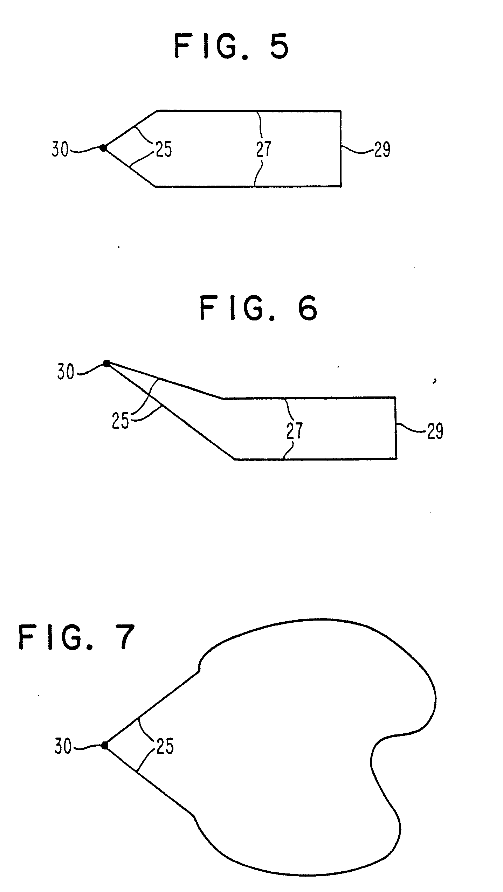

Shown in FIGS. 5-7 are examples of areas that could be used to correspond to the selection of an item on a menu. Notice that all three areas have two radii 25 which extend from central point 30. Each pair of radii is also used to form the perimeter of a corresponding area. FIGS. 5 & 6 show an area with the perimeter also having two parallel sides 27 orthogonal to a third side 29. The use of the areas shown in FIGS. 5 & 6 would facilitate the listing of items of a menu in a series of columns about a central point. FIG. 7 shows a more general type of area that could be used.

## Hardware and System Software

This embodiment involves the use of an all-points-addressable (APA) display, which allows the drawing of diagonal lines, attached to a general-purpose personal computer. The display may be in color, may be monochrome, or may allow shades of gray.

The computer and attendant system software must have some method for displaying and moving an on-screen cursor. The preferred pointing device for moving the cursor and also selecting menu items is a mouse or stylus, although the technique works with the use of keyboard keys alone. Application software must have the capability, through use of the underlying system software, to obtain input from the pointing device and to re-position the cursor at any desired location on the display.

The underlying system software is also assumed to enable the generation of at least a limited repertoire of graphic primitives, including lines, polygons and text strings.

## Shape of Menu Entries

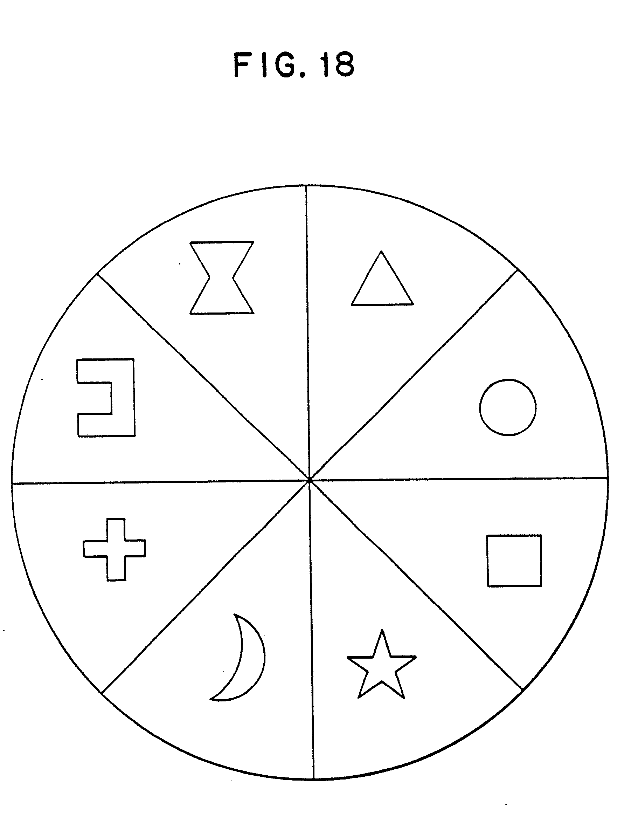

To be effective, this technique requires that two lines (radii) radiating from a central point in the menu be included in the perimeter of the area corresponding to each item. The corresponding areas can otherwise be of arbitrary shape (see FIG. 7). For example, the entire menu could be circular (as illustrated in FIG. 18), with lines radiating from the center of the circle, making the corresponding areas resemble slices of a pie. This form might be appropriate when the menu items are to be labeled with icons.

The embodiment presented uses a rectangular menu, and the perimeter of each area is made up of straight lines only. This simplifies the display of the menus and the recognition of which item has been selected. It also allows menu items to be labeled easily with text strings rather than icons. FIGS. 1, 2, 3, and 4 illustrate these menus with various numbers of items.

Menu Generation

The use of unit coordinates is assumed. That is, coordinate values are real numbers between 0 and 1, with (0,0) representing the lower left-hand corner of the screen and (1,1) the upper right-hand corner. These are readily transformed back and forth from any real screen dimensions, making the algorithms presented here independent of the screen resolution.

The menus to be displayed can be generated once for a given application, or they might be dynamically created during the execution of a given application. The algorithm presented here is simple enough that it could be used in either circumstance.

Each menu will be stored as though centered at (0,0) and can be displayed at any location on the screen by adding a constant offset to the stored values.

In this preferred embodiment, a menu is represented as a list of menu items. The internal representation of each menu item contains at least the following information:

. the text of the label for the item

. a list of the vertices of the polygonal perimeter of the area corresponding to the item.

The internal representation of a menu item might optionally contain other information such as:

. how to display the item (background color, background texture pattern, text color, etc.)

. the status of the item (for example, whether it can currently be selected)

. navigation (the name of another menu to display when this item is selected, or the name of a program or procedure to execute)

In addition, the internal representation of a menu will contain some global information:

. the coordinates of the upper-right corner of the menu

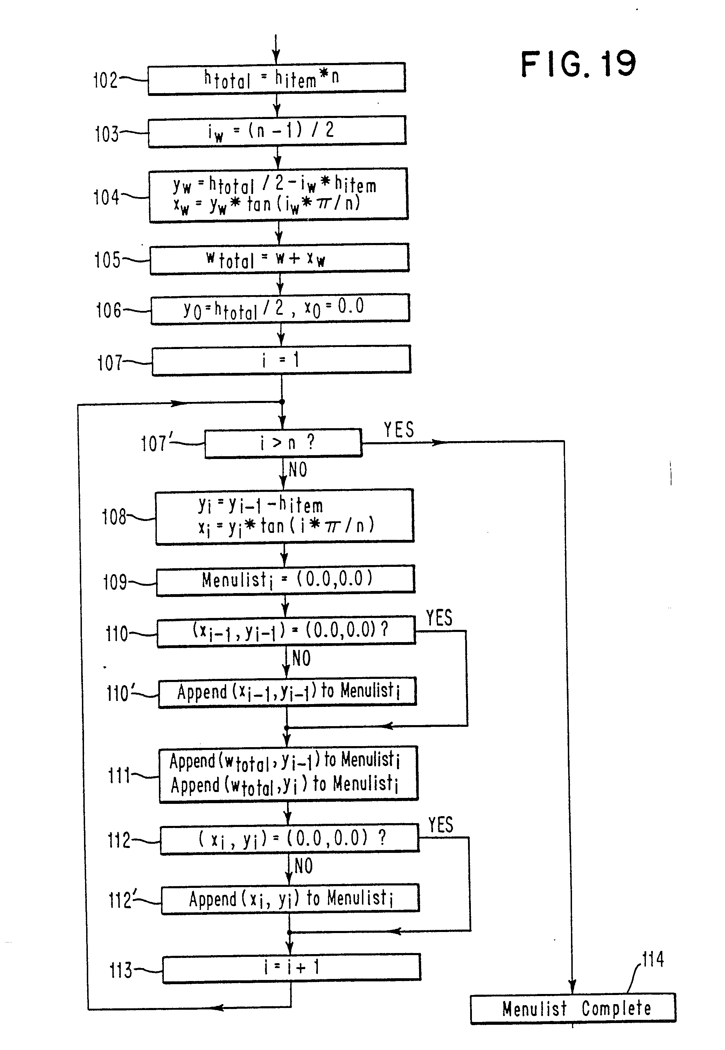

Procedure to generate menus: The following procedure "menu__list" (see also FIG. 19) generates the coordinates of menu items. It returns an array of lists of points defining the polygonal perimeters of the menu items. The items are ordered from top to bottom in the column, and each item's list of points is ordered in clockwise order.

$$100 \quad \text{procedure menu\_list}(h_{item}, w_{label}, n)$$

```
101   returns array of point_list

      begin
102        h_total = h_item * n

103        i_w = (n-1) /2

104        Y_w = h_total/ 2 - i_w * h_item
           x_w = Y_w * tan(i_w * π / n)

105        w_total = w + x_w

106        Y_O = h_total / 2

107 and 107'    do i=1 to n

108            Y_i = Y_i-1 - h_item
               x_i = Y_i * tan(i * π / n)

109            menulist_i = (0.0, 0.0)

110            if (x_i-1, Y_i-1) ≠ (0.0, 0.0) then
110'               append (x_i-1, Y_i-1) to
                   menulist_i

111            append (w_total, Y_i-1) to menulist_i
               append (w_total, Y_i) to menulist_i

112            if (x_i, Y_i) ≠ (0.0, 0.0) then
112'               append (x_i, Y_i) to menulist_i

113        end do

114        return menulist
      end procedure
```

This algorithm produces coordinates as though the menu were centered at (0,0). A constant offset can be added and a coordinate transformation applied to obtain coordinates for displaying the menu at any desired location on the actual hardware screen.

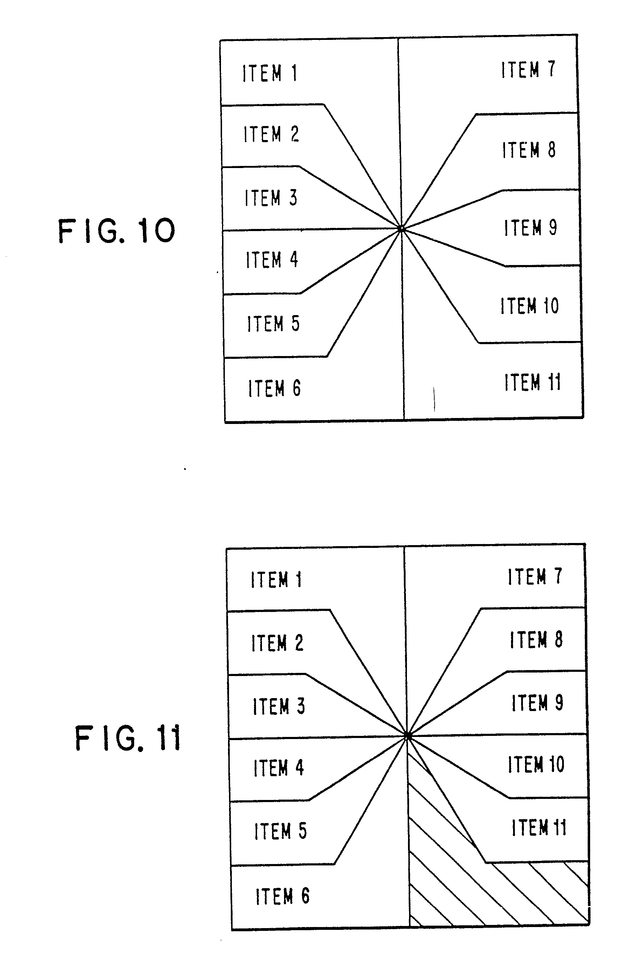

The algorithm produces coordinates for the right-hand side of a menu only. The coordinates for the left-hand side are obtained by negating the x coordinate values. If a menu is to contain an odd number of items, it would be possible to generate a menu containing an even number of items on one side and an odd number on the other. For example, a menu with 11 items might have six items on the left-hand side and five on the right-hand side (see FIG. 10). However, it may well be visually preferable to add an empty item and to have the same number of items on each half of the menu. This would not necessarily require that an entry for the empty item actually be generated and maintained, just that the other items be generated as though the empty item existed. Thus a menu with 11 items might have six items on each half, with the last item on the right-hand side unused (see FIG. 11).

Description of the procedure: The function is given as parameters (code line 100):

. the height of each area corresponding to each item

. the width of the labels (i.e. the length of the longest label to appear on the menu)

. the number of items appearing on each side of the menu.

The height and width are positive real numbers, and the number of items is a positive integer.

The procedure returns an array, each element of which is a list of (x,y) coordinate pairs (code lines 101, 114).

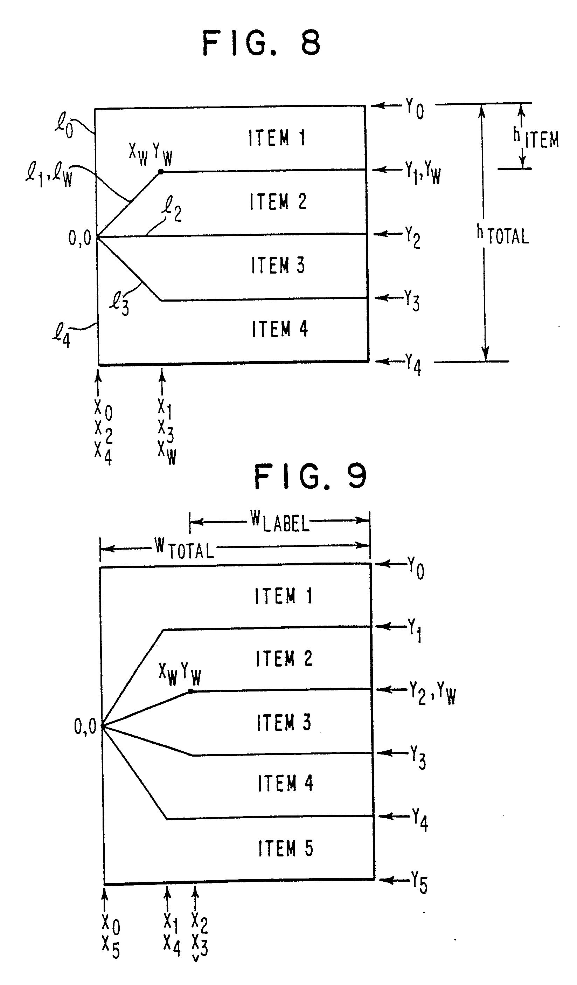

The total height of the menu is the height of each area corresponding to each item times the number of items (code line 102). The total width is the width of the labels plus the rightmost endpoint $(x_w)$ of any of the lines radiating from the central point (code line 105). See FIG. 8 for an illustration of the points involved. $i_w$ is the index of the item containing this rightmost endpoint (code line 103). Note that this is an integer, so that if n is even, the value $(n - 1)/2$ is truncated. The point $(x_w, y_w)$ is the intersection of the radiating line $l_w$ with the horizontal line at $y_w$ (code line 104).

Initial values for the loop (code lines 107-113) are set up in code line 106. The loop is repeated for each menu item (code line 107). Code line 108 causes items to be generated from top (higher y values) to bottom. $x_i$ is again the intersection of the radiating line with the horizontal line at $y_i$.

menulist$_i$ is the list of coordinate points for menu item number i. All lists begin with the central point (0,0) (code line 109). See FIGS. 8 and 9 for illustrations of menus with both even and odd numbers of items. Note that some items contain four sides and some contain five. The tests at code lines 110 and 112 provide that duplicate points are not included in the list. The points at the right end of each item are included in the list in code line 111. There is an implied side from the last point on the list back to (0,0) (the first point on the list).

Menu Placement and Display

The preferred location for a menu which will be displayed and subsequently removed, typically after a choice has been made from the menu, is as close as possible to the current on-screen cursor location at the moment the display of the menu is initiated. This allows the user's attention to remain focused at the site of the cursor and minimizes the motion required by the hand controlling the pointing device.

If the current cursor location is sufficiently far from the margins of the screen, the menu can be centered exactly at the cursor location. Otherwise, the center of the menu will have to be moved to allow the entire menu to be shown on-screen.

In particular if the current cursor location is $(x_c, y_c)$ and the upper-right corner of the menu as stored is at $(x_m, y_m)$, then the offset which should be added to the stored menu coordinates in order to display the menu is:

$(\min(\max(x_c, x_m), 1-x_c), \min(\max(y_c, y_m), 1-y_c))$

After the menu has been displayed, the cursor is moved to (redisplayed at) the center of the menu. This is essential to allow all choices to be made with an equal motion of the pointing device. After the menu is removed from the screen, the cursor may be moved back to the location it was at before the menu was displayed, or it may remain at the location it was at immediately before the menu was removed.

As an alternative to displaying menus at or near the current cursor location, the menus may be displayed always at the same location on the screen, for example one of the corners. In this case, the only requirement to gain the benefit of the menus described here is that the cursor be moved to the center of the menu after it is displayed. This may, however, require a shift of attention by the user from one area of the screen to another.

The actual display of the menu may be done in a variety of ways, so long as the polygonal perimeter of each menu item, especially the two radii extending from the central point of the menu, is visible to the user. For example, the perimeter of each item might be drawn with lines, or the body of each item might be drawn as a solid or patterned polygon. In the latter case, the radii extending from the central point are visible as boundaries between the areas enclosing menu items.

Detection of Inclusion in Menu Items

It is desirable to highlight the current menu item (i.e. the menu item, if any, whose corresponding area contains the current cursor location) as the user moves the cursor on the screen, so that the user has a constant visual reminder of which item would be chosen were a selection to be made at that cursor location. Once a selection has been made (for example, a mouse button pressed), it may be necessary to determine in which menu item the cursor location lies. Since the menu items generated by "menu_list" contain only straight side, it suffices to have a test for inclusion of a point in a polygon.

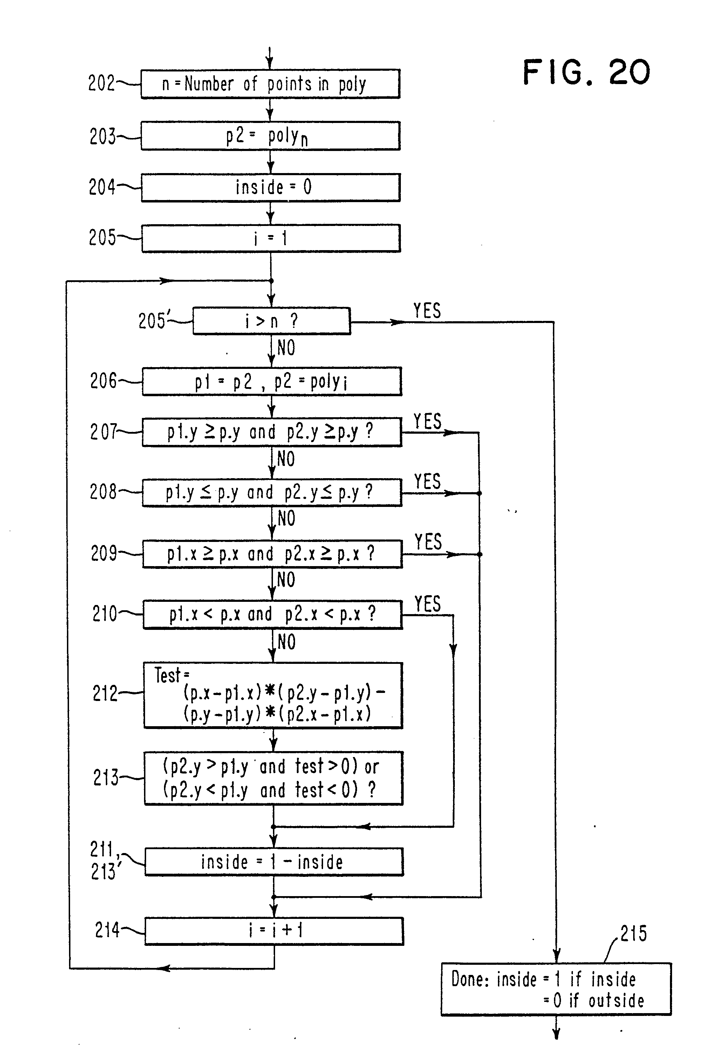

Procedure to test for inclusion in a polygon: The following procedure "test_inside" tests whether a point is contained inside a polygon (see also FIG. 20). The algorithm is based upon the well-known mathematical fact that a straight line extended from a point in a plane will intersect a closed figure in the same plane an odd number of times if the point lies inside the curve and an even number of times if it lies outside the curve. This procedure uses a line extending horizontally to the left from the point in question.

```
200   procedure test_inside(poly, p)

201   returns integer

      .begin
202       n = number of points in poly
```

```
203   p2 = poly_n

204   inside = 0

205 and 205'   do i=1 to n

206        p1 = p2
           p2 = poly_i

207        if p1.y ≥ p.y and p2.y ≥ p.y then
                next i

208        if p1.y ≤ p.y and p2.y ≤ p.y then
           next i

209        if p1.x ≥ p.x and p2.x ≥ p.x then
           next i

210        if p1.x < p.x and p2.x < p.x then
           begin
211            inside = 1 - inside
               next i
           end if

212        test = (p.x - p1.x)*(p2.y - p1.y) -
               (p.y - p1.y)*(p2.x - p1.x)

213        if (p2.y > p1.y and test > 0) or
               (p2.y < p1.y and test < 0) then
213'               inside = 1 - inside

214        end do

215        return inside
           end procedure
```

Description of the procedure: The procedure is passed as parameters (code line 200):
. a polygon "poly", represented as a list of points with the last point connecting to the first point to close the polygon
. a point "p".

The procedure returns an integer value which will be 0 if the point lies outside the polygon and 1 if it lies inside the polygon (code line 201).

The number of points in the polygon list is either stored explicitly as part of the data structure representing the list or can be obtained by scanning through the list, counting the points (code line 202). The algorithm considers the intersection of the line extending from p with successive line segments extending from point p1 to point p2. The endpoint p2 is initialized to the last point in the polygon point list (code line 203) so that the first line segment considered will be from the last point to the first.

The variable "inside" will contain the parity of the number of crossings seen so far (0 if even, 1 if odd). Initially, no line crossings have been detected (code line 204).

The loop (code lines 205-214) is repeated for each line segment in the polygon. The previous endpoint becomes the current startpoint, and the current endpoint is the next point in the polygon list (code line 206).

The notations ".x" and ".y" signify the x and y components of the point in question. The statement "next i" means that the next iteration of the loop will be started immediately without performing the remaining steps in the body of the loop.

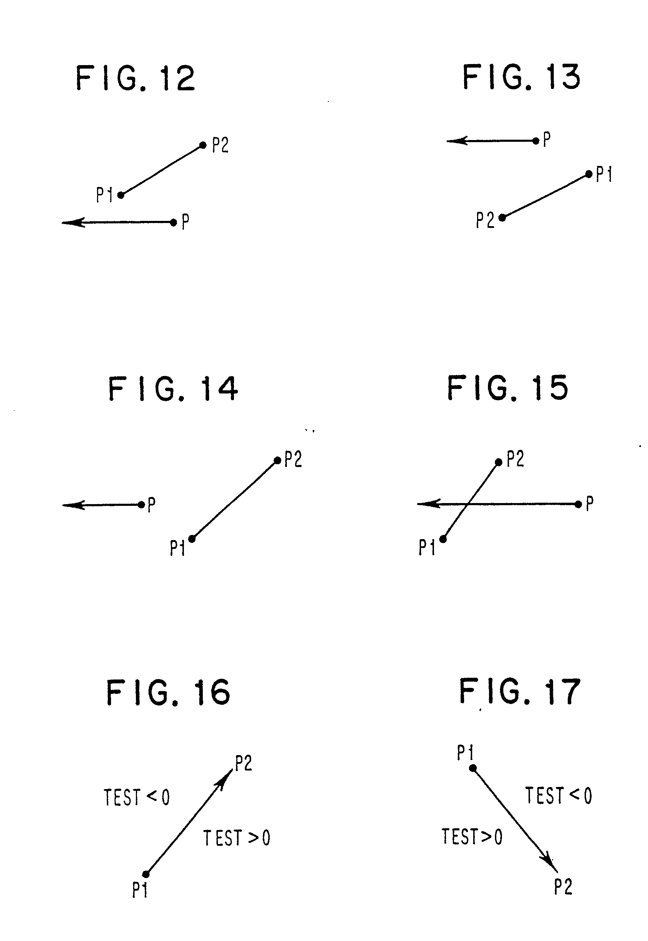

See FIGS. 12-17 for an illustration of the various cases being tested for in code lines 207-213. If p lies below the line segment, there can be no crossing (code line 207; see FIG. 12). If it lies above the segment, there can be no crossing (code line 208; see FIG. 13). If it lies to the left of the segment, there can be no crossing (code line 209; see FIG. 14). If it lies to the right of the line segment (and is known not to be either above or below), then there must be a crossing (code line 210 and 211; see FIG. 15). The last two tests are not strictly necessary, since the test value calculated in code line 212 is general. However, performing them reduces the number of times the more expensive calculation in code line 212 needs to be done.

Finally, the relationship between the point p and the line from p1 to p may have to be calculated. The test value (code line 212) is derived from the formula for the line passing between point p1 and p2. If the line segment (directed from p1 to p2) extends upward and the test value is positive (see FIG. 16), or if the line segment extends downward and the test value is negative (see FIG. 17), the point lies to the right of the line and a crossing occurs (code line 213 and 213$'$).

The parity after all segments have been tested will reflect whether the point lies inside or outside the polygon (code line 215).

## Tracking and Recognition of a Selection

As mentioned above, it is desirable to interactively highlight menu items as the cursor tracks the user's movement of the pointing device.

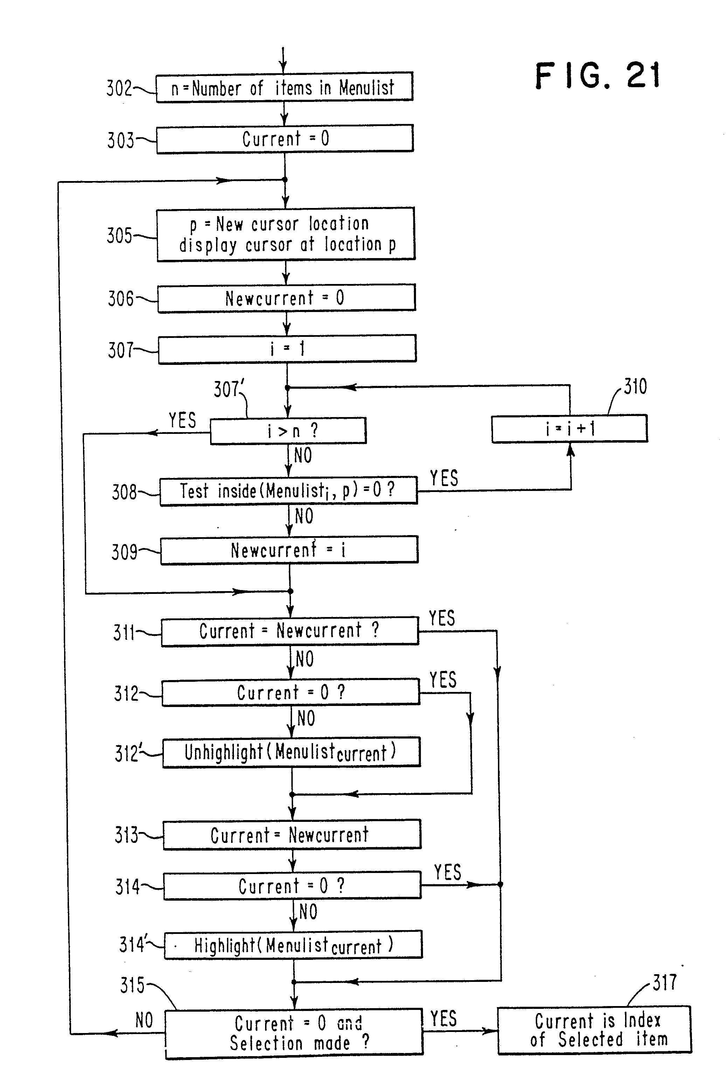

Procedure to highlight menu items: The following procedure "track" handles the tracking of the pointing device and highlighting of the menu items see also FIG. 21). It assumes that only one menu is currently displayed on the screen, but can be generalized in a straightforward manner to handle multiple menus.

```
300   procedure track(menulist)

301   returns integer

      begin
302        n = number of items in menulist

303   current = 0

304   do forever

305        p = new cursor location
           display cursor at location p
```

```
306              newcurrent = 0

307 and 307'           do i=1 to n

308                  if test_inside(menulist_i, p) ≠ 0
                     then
                     begin
309                      newcurrent = i
                         exitdo
                     end if
310          end do

311      if current ≠ newcurrent then
             begin
312          if current ≠ 0 then
312'             unhighlight(menulist_current)

313          current = newcurrent

314          if current ≠ 0 then
314'             highlight(menulist_current)
             end if

315      if current ≠ 0 and selection made then
             exitdo

316      end do

317  return current
     end procedure
```

Description of the procedure: The procedure is passed as a parameter (code line 300):
. a list of menu items, as generated with the aid of procedure "menu__list"

The procedure returns the index of the item selected (code line 301). As written, the procedure does not terminate until some valid selection is made. The test at code line 315 can easily be expanded to test for any exceptional inputs or conditions which might cause the procedure to terminate without a valid choice, in which case the return value would be 0.

The number of items in the menu list is either stored explicitly as part of the data structure representing the list or can be obtained by scanning through the list, counting the items (code line 302). Initially, no menu item is selected or highlighted (code line 303).

The outer loop (code line 304-316) is executed indefinitely until explicitly terminated. The notation "exitdo" signifies that the nearest enclosing do loop is terminated. Any additional outer loops are not terminated.

The new cursor location is obtained, and the on-screen cursor moved to that location (code line 305). The underlying system software is assumed to employ well-known techniques for handling interrupts from the pointing device hardware, applying hysteresis to the input if necessary, translating to a desired coordinate system if necessary, and storing the values in an input buffer, allowing application programs to retrieve the succession of values from the input buffer.

The new cursor location is initially assumed to lie outside all menu items (code line 306). The loop at code lines 307-310 checks whether it lies inside the perimeter of any item. The procedure "test_inside" is called for each menu item to determine if the point lies inside the perimeter of the item (code line 308). If so, the index is remembered and the search terminates (code line 309).

Once the new current item, if any, has been determined, highlights may have to be removed or added to the previous and new current items (code lines 311-314). This needs to be done only if the current items have changed (code line 311).

Highlighting of a menu item can be done in a number of ways, for example by changing the colors of the items or by drawing a bounding polygon around the item. The specifics of highlighting and removing the highlight from an item are not given here.

Once any highlight has been removed (code line 312 and 312'), the old current item can be forgotten code line 313) and the new one highlighted if it exists (code line 314 and 314').

If a selection has been made (for example, a mouse button pressed) and the cursor is in fact inside the perimeter of some menu item, then tracking can terminate (code line 315). If the cursor is not inside the perimeter of any menu item, tracking continues.

Once the indeterminate loop is exited, "current" contains the index of the selected menu item (code line 317).

## Claims

1. A graphic display wherein any one of a number of items of a menu is selected by positioning a cursor on said display, an apparatus for selecting one of said items with minimal or broad cursor movement comprising:
means for displaying said items about only one central point on said display, with said cursor being simultaneously positioned at said central point when said items are displayed about said central point; and
means, responsive to positioning of said cursor, for selecting one of said items when said cursor is positioned in a corresponding area having two radii as sides of its perimeter with said radii extending from said central point and with said radii being displayed on said display.

2. An apparatus as claimed in claim 1, wherein said displaying means places said central point where said cursor last appeared on said display.

3. An apparatus as claimed in claim 1, wherein said displaying means displays said items in two columns about a central point, and wherein each said area has a corresponding one of said items displayed therein.

4. An apparatus as claimed in claim 1, wherein each said area has two parallel sides as part of the perimeter thereof, said sides being orthogonal to a third side of said perimeter.

5. A graphic display wherein any one of a number of items of a menu is selected by positioning a cursor on said display, an apparatus for selecting one of said items with minimal or broad cursor movement comprising:
means for displaying said items in two columns about only one central point on said display, with said cursor being simultaneously positioned at said central point when said items are displayed about said central point; and
means, responsive to positioning of said cursor, for selecting one of said items when said cursor is positioned in a corresponding area having two radii as sides of its perimeter with said radii extending from said central point, with said radii being displayed on said display, and with each of said items being displayed in a corresponding said area.

6. An apparatus as claimed in claim 5, wherein said displaying means places said central point where said cursor last appeared on said display.

7. An apparatus as claimed in claim 6, wherein each said area has two parallel sides as part of the perimeter thereof, said sides being orthogonal to a third side of said perimeter.

8. A selection method for a graphic display, wherein any one of a number of items of a menu is selected by positioning a cursor on said display, selection one of said items being made with minimal or broad cursor movement, comprising the steps of:

displaying on said display said items about only one central point on said display, with said cursor being simultaneously positioned at said central point when said items are displayed about said central point; and positioning said cursor, for selecting one of said items when said cursor is positioned in a corresponding area having two radii as sides of its perimeter with said radii extending from said central point and with said radii being displayed on said display.

9. A method as claimed in claim 8, wherein said central point is displayed at the position where said cursor last appeared on said display.

10. A method as claimed in claim 8, wherein said items are displayed in two columns about a central point with each said area having a corresponding one of said items displayed therein.

11. A method as claimed in claim 8, wherein each said area has two parallel sides as part of the perimeter thereof with said sides being orthogonal to a third side of said perimeter.

12. A selection method for a graphic display, wherein any one of a number of items of a menu is selected by positioning a cursor on said display, selection one of said items being made with minimal or broad cursor movement, comprising the steps of:

displaying on said display said items in two columns about only one central point on said display, with said cursor being simultaneously positioned at said central point when said items are displayed about said central point; and

positioning said cursor, for selecting one of said items when said cursor is positioned in a corresponding area having two radii as sides of its perimeter with said radii extending from said central point and with said radii being displayed on said display, and with each of said items being displayed in a corresponding said area.

13. A method as claimed in claim 12, wherein said central point is displayed at the position where said cursor last appeared on said display.

# F I G. 1

| ITEM 1 | | ITEM 4 |
| ITEM 2 | | ITEM 5 |
| ITEM 3 | | ITEM 6 |

35 30 20

# F I G. 2

| ITEM 1 | | ITEM 5 |
| ITEM 2 | | ITEM 6 |
| ITEM 3 | | ITEM 7 |
| ITEM 4 | | ITEM 8 |

35 30 20

# FIG. 3

ITEM 1 | ITEM 6
ITEM 2 | ITEM 7
ITEM 3 | ITEM 8
ITEM 4 | ITEM 9
ITEM 5 | ITEM 10

35

30

20

# FIG. 4

ITEM 1 | ITEM 7
ITEM 2 | ITEM 8
ITEM 3 | ITEM 9
ITEM 4 | ITEM 10
ITEM 5 | ITEM 11
ITEM 6 | ITEM 12

35

30

20

## FIG. 5

## FIG. 6

## FIG. 7

# FIG. 8

# FIG. 9

FIG. 10

| ITEM 1 | ITEM 7 |
| ITEM 2 | ITEM 8 |
| ITEM 3 | ITEM 9 |
| ITEM 4 | ITEM 10 |
| ITEM 5 | ITEM 11 |
| ITEM 6 | |

FIG. 11

| ITEM 1 | ITEM 7 |
| ITEM 2 | ITEM 8 |
| ITEM 3 | ITEM 9 |
| ITEM 4 | ITEM 10 |
| ITEM 5 | ITEM 11 |
| ITEM 6 | |

# FIG. 12

P2
P1
← P

# FIG. 13

← P
P1
P2

# FIG. 14

P2
← P
P1

# FIG. 15

P2
← P
P1

# FIG. 16

P2
TEST < 0
TEST > 0
P1

# FIG. 17

P1
TEST < 0
TEST > 0
P2

# FIG. 18

IBM — YO 988 021

FIG. 19

102 — $h_{total} = h_{item} * n$

103 — $i_w = (n - 1) / 2$

104 — $y_w = h_{total} / 2 - i_w * h_{item}$
$x_w = y_w * \tan(i_w * \pi / n)$

105 — $w_{total} = w + x_w$

106 — $y_0 = h_{total} / 2 , x_0 = 0.0$

107 — $i = 1$

107' — $i > n$ ? — YES

NO

108 — $y_i = y_{i-1} - h_{item}$
$x_i = y_i * \tan(i * \pi / n)$

109 — $Menulist_i = (0.0, 0.0)$

110 — $(x_{i-1}, y_{i-1}) = (0.0, 0.0)$ ? — YES

NO

110' — Append $(x_{i-1}, y_{i-1})$ to $Menulist_i$

111 — Append $(w_{total}, y_{i-1})$ to $Menulist_i$
Append $(w_{total}, y_i)$ to $Menulist_i$

112 — $(x_i, y_i) = (0.0, 0.0)$ ? — YES

NO

112' — Append $(x_i, y_i)$ to $Menulist_i$

113 — $i = i + 1$

114

Menulist Complete

FIG. 20

202 — | n = Number of points in poly |

203 — | p2 = poly$_n$ |

204 — | inside = 0 |

205 — | i = 1 |

205' — | i > n ? | —— YES

NO

206 — | p1 = p2 , p2 = poly$_i$ |

207 — | p1.y ≥ p.y and p2.y ≥ p.y ? | —— YES

NO

208 — | p1.y ≤ p.y and p2.y ≤ p.y ? | —— YES

NO

209 — | p1.x ≥ p.x and p2.x ≥ p.x ? | —— YES

NO

210 — | p1.x < p.x and p2.x < p.x ? | —— YES

NO

212 — | Test = (p.x − p1.x) * (p2.y − p1.y) − (p.y − p1.y) * (p2.x − p1.x) |

213 — | (p2.y > p1.y and test > 0) or (p2.y < p1.y and test < 0) ? |

211, 213' — | inside = 1 − inside |

214 — | i = i + 1 |

215 — | Done: inside = 1 if inside = 0 if outside |

# FIG. 21

302 — n = Number of items in Menulist

303 — Current = 0

305 — p = New cursor location
display cursor at location p

306 — Newcurrent = 0

307 — i = 1

307' — i > n ?  → YES

310 — i = i + 1

308 — Test inside(Menulist$_i$, p) = 0 ?  → YES

309 — Newcurrent = i

311 — Current = Newcurrent ?  → YES

312 — Current = 0 ?  → YES

312' — Unhighlight(Menulist$_{current}$)

313 — Current = Newcurrent

314 — Current = 0 ?  → YES

314' — Highlight(Menulist$_{current}$)

315 — Current = 0 and Selection made ?  → YES

317 — Current is Index of Selected item

NO (315)